# EUROPÄISCHE PATENTANMELDUNG

(11) **EP 1 043 792 A2**
(43) Veröffentlichungstag der Anmeldung: **11.10.2000**
(21) Anmeldenummer: 00107636.3
(22) Anmeldetag: 08.04.2000
(51) Int. Cl.: H01M 8/04, H01M 8/18

(54) **Vorrichtung zur Energieumwandlung mit mindestens einer Brennstoffzelle und/oder einem Hydrolyseur**

(30) Priorität: 10.04.1999 DE 19916243
(71) Anmelder: PILLER-GmbH, 37520 Osterode am Harz (DE)
(72) Erfinder: Ruthrof, Klaus, 91126 Schwabach (DE); Sachs, Klaus, 37520 Osterode (DE); Gosebruch, Harald, Dr., 27283 Verden (DE)
(74) Vertreter: Patentanwälte Rehberg + Hüppe

(57) **Zusammenfassung**

Die Erfindung bezieht sich auf eine Vorrichtung zur Energieumwandlung mit mindestens einer Brennstoffzelle (2), die zwei Elektroden (7) zum Ableiten des in der Brennstoffzelle (2) erzeugten Stroms aufweist. Es ist eine Unipolarmaschine (3) mit einem Rotor (15) vorgesehen, der einen leitenden Mantel (16) aufweist. Die beiden Elektroden (7) der mindestens einen Brennstoffzelle (2) sind über den leitenden Mantel (16) des Rotors (15) der Unipolarmaschine (3) kurzschließbar. Statt der Brennstoffzelle (2) kann die Vorrichtung auch einen Hydrolyseur aufweisen.

## Beschreibung

Die Erfindung bezieht sich auf eine Vorrichtung zur Energieumwandlung mit mindestens einer Brennstoffzelle, die zwei Elektroden zum Ableiten des in der Brennstoffzelle erzeugten Stroms aufweist. Weiterhin bezieht sich die Erfindung auf eine Vorrichtung zur Energieumwandlung mit mindestens einem Hydrolyseur, der zwei Elektroden zum Zuleiten des in dem Hydrolyseur verbrauchten Stroms aufweist. Dabei ist die zweite Vorrichtung bis auf die Umkehrung des in der Brennstoffzelle bzw. dem Hydrolyseur ablaufenden Vorgangs prinzipiell wie die erste Vorrichtung aufgebaut. Das heißt, während in einer Brennstoffzelle ein Brenngas, in der Regel Wasserstoff, und Sauerstoff zu Wasser verbrannt werden, um Strom zu erzeugen, wird in dem Hydrolyseur durch Strom Wasser in Wasserstoff und Sauerstoff aufgespalten.

Eine herkömmliche Brennstoffzelle kann durch Anlegen einer äußeren Spannung als Hydrolyseur genutzt werden. Sinnvoll ist aber eine Optimierung bezüglich der jeweiligen Hauptaufgabe als Hydrolyseur bzw. als Brennstoffzelle.

Brennstoffzellen sind in der Lage, recht große Ströme zu erzeugen. Ohne Reihenschaltung liegt die abgreifbare Spannung jedoch nur in der Größenordnung von 0,3 bis 1 Volt. Große Ströme mit sehr kleiner Spannung unterliegen sehr hohen Widerstandsverlusten auch bei nur kurzen Leitungsstrecken. Bei einer Reihenschaltung von Brennstoffzellen müssen auch innere Widerstände und die damit verbundenen Leistungsverluste in die Betrachtung mit einbezogen werden.

Es ist grundsätzlich möglich, die großen Ströme von Brennstoffzellen mit Halbleiter-Wechselrichtern in einen Wechselstrom umzuwandeln und diesen Wechselstrom anschließend auf höhere Spannungen und geringere Ströme zu transformieren. Dies ist aber ebenfalls mit Leistungsverlusten verbunden und die Halbleiter-Bausteine, die für sehr große Ströme geeignet sind, sind extrem aufwendig und damit kostspielig.

Der Erfindung liegt die Aufgabe zugrunde, einen neuen Weg zur besonders effektiven Handhabung der von einer Brennstoffzelle erzeugten großen Ströme bei niedriger Spannung aufzuzeigen. Gleichzeitig soll ein Weg aufgezeigt werden, wie ein Hydrolyseur effektiv mit relativ großen Strömen bei niedriger Spannung versorgt werden kann, da bei einem Hydrolyseur trotz Umkehrung seiner Arbeitsrichtung im Prinzip dieselben Schwierigkeiten auftreten wie bei einer Brennstoffzelle.

Erfindungsgemäß wir diese Aufgabe bei einer Vorrichtung zur Energieumwandlung mit mindestens einer Brennstoffzelle, die zwei Elektroden zum Ableiten des in der Brennstoffzelle erzeugten Stroms aufweist dadurch gelöst, daß eine Unipolarmaschine mit einem Rotor vorgesehen ist, der einen leitenden Mantel aufweist, wobei die beiden Elektroden der mindestens einen Brennstoffzelle über den leitenden Mantel des Rotors der Unipolarmaschine kurzschließbar sind. Unipolarmaschinen sind bekannte elektrische Maschinen mit denen Gleichströme in Drehmoment, d. h. elektrische Gleichstromenergie in mechanische Rotationsenergie umgesetzt werden können. Dabei sind Unipolarmaschinen insbesondere für große Gleichströme niedriger Spannung geeignet. Entsprechend kann der von der mindestens einen Brennstoffzelle erzeugte Gleichstrom unmittelbar in eine Unipolarmaschine eingespeist werden.

Dabei ist es möglich, daß die beiden Elektroden der mindestens einen Brennstoffzelle über den Mantel der Unipolarmaschine unterbrechungsfrei verbunden sind, so daß auch keine Innenwiderstände durch irgendwelche mechanischen oder Halbleiter-Schaltelemente auftreten.

Die Steuerung der mindestens einen Brennstoffzelle kann auch bei unterbrechungsfreier Verbindung der beiden Elektroden über den Mantel durch eine Steuereinrichtung erfolgen, die einen Strom durch mindestens eine Erregerspule eines Stators der Unipolarmaschine regelt. Auf diese Weise ist über den Mantel des Rotors eine einstellbare Gegenspannung zwischen den Elektroden der Brennstoffzelle aufbringbar. So kann die Brennstoffzelle beispielsweise in ihren optimalen Arbeitspunkt bezüglich der Spannung zwischen den beiden Elektroden gebracht bzw. dort gehalten werden.

Zur Nutzung des von der Unipolarmaschine erzeugten Drehmoments kann der Rotor der Unipolarmaschine mit einem Rotor eines Generators, beispielsweise eines Wechselstromgenerators, verbindbar sein. Diese Anordnung ist auch für eine unterbrechungsfreie Stromversorgung eine interessante Alternative zu heutigen Einrichtungen. Wenn der Rotor der Unipolarmaschine und der Rotor des Generators kontinuierlich umlaufen, wobei noch eine zusätzliche Schwungmasse auf der gemeinsamen Welle angeordnet sein kann, ist es durch Ansteuern der Brennstoffzelle sehr kurzfristig möglich, elektrischen Strom mit recht großer Leistung durch den Generator zu erzeugen.

Um die Wege für den von der Brennstoffzelle erzeugten Strom möglichst kurz zu halten, kann die mindestens eine Brennstoffzelle an dem Rotor angeordnet sein und mit diesem umlaufen. Auch ein Brenngastank zur Versorgung der mindestens einen Brennstoffzelle kann an dem Rotor angeordnet sein und mit diesem umlaufen. In diesem Fall müssen weder Strom- noch Gasverbindungen zwischen einem ruhenden Bauteil und einem rotierenden Bauteil vorgesehen werden. Die Sauerstoffversorgung der Brennstoffzelle kann ohne weiteres aus der Umgebungsluft erfolgen.

Die mindestens eine Brennstoffzelle an dem Rotor kann streifenförmig ausgebildet und spiralförmig um eine Rotorachse des Rotors herum aufgewickelt sein. Auf diese Weise ist es möglich, die Brennstoffzelle mit recht großer aktiver Fläche kompakt auszubilden und an dem Rotor unterzubringen. Der von der Brennstoffzelle erzeugbare Strom ist linear von Ihrer aktiven Fläche abhängig.

Die neue Vorrichtung zur Energieumwandlung ist besonders interessant, wenn die mindestens eine Brennstoffzelle durch Anlegen einer äußeren Spannung über den Mantel des Rotors in einen Hydrolyseur umkehrbar ist. Hierbei ist nicht die prinzipielle Umkehrbarkeit der Wirkrichtung der Brennstoffzelle gemeint, sondern ihre effektive Nutzbarkeit als Hydrolyseur. Wenn diese gegeben ist, kann mit der neuen Vorrichtung zu gewissen Zeiten vorhandene überschüssige elektrische Energie in Form von Wasserstoff gespeichert werden. In Zeiten eines Mangels an elektrischer Energie kann die Energie mit Vorrichtungen aus dem Wasserstoff dann wieder freigesetzt werden. Das von der als Hydrolyseur betriebenen Brennstoffzelle benötigte Wasser muß bei Anordnung der Brennstoffzelle an dem Rotor der Unipolarmaschine ebenfalls an dem Rotor bereitgestellt werden. Um die äußere Spannung über den Mantel des Rotors anzulegen, wird bei sich drehendem Rotor der Strom durch eine oder mehrere Erregerspulen am Stator der Unipolarmaschine so angesteuert, daß die Kraft auf die Elektronen in dem Mantel des Rotors eine solche Richtung und Stärke aufweist, wie sie zum Aufbau einer Betriebsspannung für den Hydrolyseurs benötigt wird. Die Drehbewegung des Rotors kann von einer elektrischen Maschine abgeleitet werden, die im Betrieb der Brennstoffzelle als Brennstoffzelle von der Unipolarmaschine als Generator angetrieben wird. Hiermit ergeben sich besonders interessante Anwendungsmöglichkeiten im USV-Bereich.

Eine Vorrichtung zur Energieumwandlung mit mindestens einem Hydrolyseur, der zwei Elektroden zum Zuleiten des in dem Hydrolyseur verbrauchten Stroms aufweist, ist erfindungsgemäß bis auf ein Austauschen der mindestens einen Brennstoffzelle durch den mindestens einen Hydrolyseur durch dieselben Merkmale wie die Vorrichtung zur Energieumwandlung mit mindestens einer Brennstoffzelle gekennzeichnet.

Die Erfindung wird im folgenden anhand von Ausführungsbeispielen näher erläutert und beschrieben. Dabei zeigt
- Figur 1: die prinzipielle Anordnung der neuen Vorrichtung zur Energieumwandlung,
- Figur 2: die neue Vorrichtung mit einem Wechselstromgenerator und
- Figur 3: ein Detail einer speziellen Ausführungsform der neuen Vorrichtung.

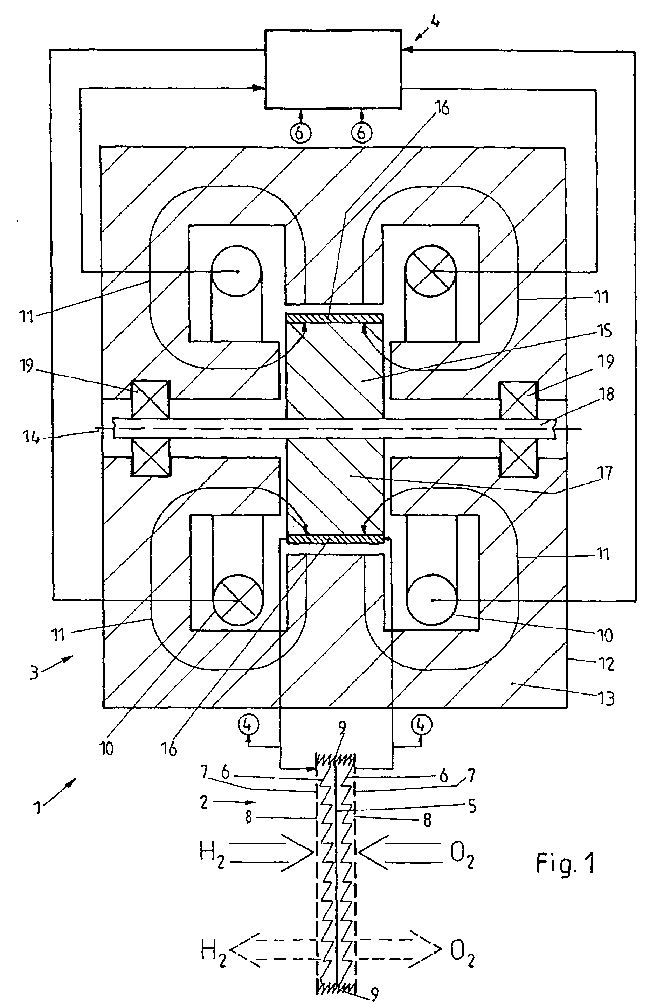

Die in Figur 1 dargestellte Vorrichtung 1 weist eine Brennstoffzelle 2, eine Unipolarmaschine 3 und eine Steuereinrichtung 4 auf. Die Brennstoffzelle 2 ist hier vom sogenannten PEM-Typ, bei dem eine zentrale Polymermembran 5 vorgesehen ist, die als Polymer-Elektrolyt-Membran (Proton-Exchange-Membran) ausgebildet ist. An die Polymermembran grenzen beidseitig Diffuserschichten 6 an. Die Diffuserschichten 6 werden durch flächige Elektroden abgestützt und an die Polymermembran 5 angedrückt. Die Elektroden 7 dienen zur Abfuhr des in der Brennstoffzelle 2 durch Verbrennen von Wasserstoff H₂ und Sauerstoff O₂ zu Wasser H₂O erzeugten Stroms. Um dabei den Zutritt des Wasserstoffs und des Sauerstoffs zu der Polymermembran über die Diffuserschichten 6 zu ermöglichen, weisen die Elektroden 7 Durchbrechungen 8 auf. Das Paket aus der Polymermembran 5, den Diffuserschichten 6 und den Elektroden 7 ist lateral durch Gießmasse 9 abgedichtet. Der zwischen den Elektroden 7 fließende Strom ist bei einer Brennstoffzelle 2 relativ groß und durch Vergrößern der Fläche der Brennstoffzelle 2, d. h. der Polymermembran 5, der Diffuserschichten 6 und der Elektroden 7 leicht vergrößerbar. Die Spannung zwischen den Elektroden 7 ist aber relativ klein und liegt je nach dem Betriebszustand bei typischerweise 0,3 bis 1 Volt. Einen relativ hohen Wirkungsgrad erreicht die Brennstoffzelle 2 bei ca. 0,5 Volt. Um die so mit relativ ungünstigen Eckdaten anfallende elektrische Leistung der Brennstoffzelle 2 in interessantere Energieformen umzuwandeln, ist die Unipolarmaschine 3 vorgesehen. Die Unipolarmaschine 3 weist hier zwei Erregerspulen 10 auf, die ortsfest und parallel zueinander angeordnet sind und die in entgegengesetzten Richtungen von Strom durchflossen werden, wie durch die in den Querschnitt der Unipolarmaschine 3 eingezeichneten Richtungssymbole angedeutet ist. Hierdurch ergibt sich der eingezeichnete Verlauf der magnetischen Feldlinien 11, die zwischen den Erregerspulen 10 radial nach außen gerichtet sind. Das magnetische Feld wird in dem Stator 12 der Unipolarmaschine 3 durch einen Eisenkern 13 so geführt, daß das magnetische Feld axial zu einer Rotorachse 14 des Rotors 15 der Unipolarmaschine 3 in den Rotor eintritt und über einen Mantel 16 radial aus dem Rotor 15 austritt. Der Rotor 15 weist zur Führung des magnetischen Felds ebenfalls einen Eisenkern 17 auf. Eine Welle 18 des Rotors 15 ist gegenüber dem Stator 12 in Drehlagern 19 gelagert. Der Mantel 16 des Rotors 15 ist elektrisch leitend. Beispielsweise besteht er aus massivem Kupfer, das in Umfangsrichtung um die Rotorachse 14 in einzelne Streifen unterteilt sein kann. Der Mantel 16 ist mit den Elektroden 7 der Brennstoffzelle 2 verbunden, so daß die Elektroden 7 durch den Mantel 16 kurzgeschlossen sind. Das heißt, ein von der Brennstoffzelle 2 erzeugter Strom fließt axial über den Mantel 16. Hieraus folgt, daß die Stromflußrichtung senkrecht zu den Feldlinien 11 verläuft, so daß unmittelbar auf die fließenden Elektronen und mittelbar auf den Mantel 16 eine Kraft ausgeübt wird, die ein Drehmoment um die Rotorachse 14 ergibt. Dieses Drehmoment kann unmittelbar von der Welle 18 des Rotors 15 abgegriffen und genutzt werden. Die Steuerung 4 steuert den Strom durch die Erregerspulen 10. Mit diesem Strom kann auch eine Spannung zwischen den Elektroden 6 der Brennstoffzelle 2 eingestellt werden. Zur Ermittlung des Ist-Werts greift die Steuereinrichtung 4 die Spannung ab. Durch die Drehbewegung des Mantels 16 durch das magnetische Feld der Erregerspulen 10 wird eine Kraft auf die Elektronen in dem Mantel 16 ausgeübt, die zu einer Spannung zwischen den axialen Enden des Mantels 16 führt. Diese Spannung addiert sich zu der originären Spannung zwischen den Elektroden der Brennstoffzelle 2, wodurch die Gesamtspannung zwischen den Elektroden 6 der Brennstoffzelle 2 sowohl erhöht als auch erniedrigt werden kann. Damit kann die Brennstoffzelle in ihren optimalen Arbeitspunkt gebracht, aber auch völlig deaktiviert werden. Es ist darüber hinaus möglich, eine derart große äußere Spannung an die Brennstoffzelle 2 anzulegen, daß diese als Hydrolyseur wirkt, wie durch gestrichelte Symbole H₂ und O₂ angedeutet ist. Das heißt, die als Hydrolyseur wirkende Brennstoffzelle 2 spaltet dann Wasser H₂O, das ihr an der O₂- und/oder an der H₂-Seite der Polymermembran 5 zur Verfügung gestellt werden muß, in Wasserstoff und Sauerstoff auf. Der Vorteil der Vorrichtung 1 gemäß Figur 1 liegt vor allem darin, daß die Unipolarmaschine 3 direkt mit dem großen Strom geringer Spannung der Brennstoffzelle 2 betrieben werden kann. Dem steht jedoch nicht entgegen, daß auch zwei oder mehr Brennstoffzellen 2 in Reihe geschaltet werden, um einen Strom etwas größerer Spannung für die Unipolarmaschine 3 bereitzustellen.

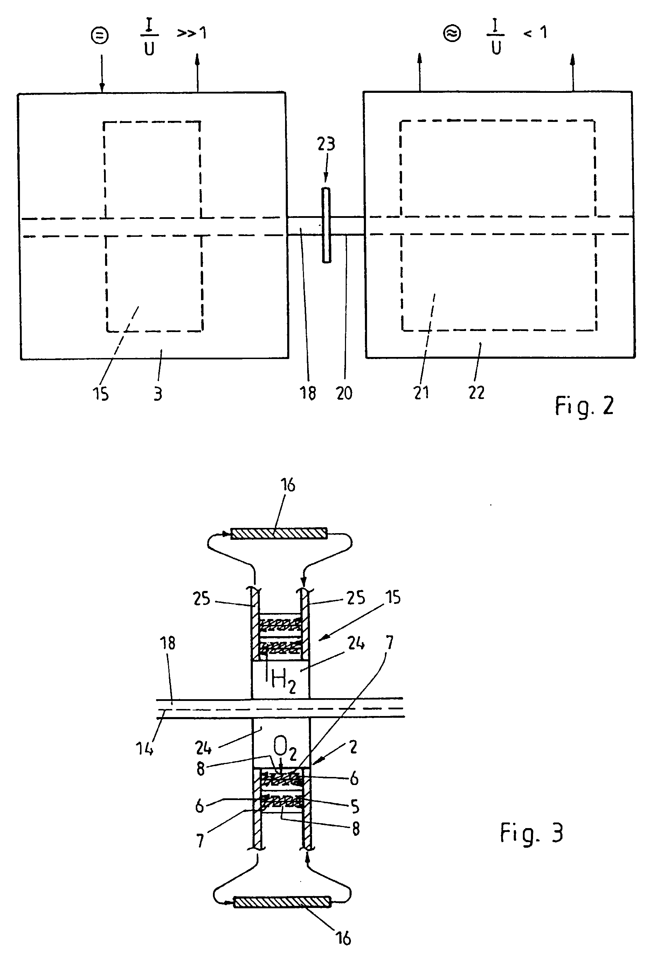

Figur 2 skizziert die Verbindung der Welle 18 des Rotors 15 der Unipolarmaschine 3 gemäß Figur 1 mit der Welle 20 eines Rotors 21 eines Wechselstromgenerators 22. Als verbindendes Element 23 kann eine Kupplung, ein Getriebe, ein Drehmomentwandler oder dgl. vorgesehen sein. Im einfachsten Fall handelt es sich um eine starre Wellenverbindung oder eine Überhohlkupplung. Der Wechselstromgenerator 22 erzeugt aus dem von der Unipolarmaschine 3 aufgenommenen Gleichstrom mit großem Strom und geringer Spannung einen Wechselstrom mit größerer Spannung und kleinerem Strom. Das heißt, die Gesamtanordnung gemäß Figur 2 dient als Wechselrichter und Transformator für den von der hier nicht eingezeichneten Brennstoffzelle 2 gemäß Figur 1 erzeugten Strom. Obwohl hierfür ein elektromechanischer Weg beschritten wird, ist diesbezüglich des Gesamtwirkungsgrads im Vergleich zu einer Wechselrichtung über Halbleiter-Bausteine und ein anschließendes Hochtransformieren der Spannung nicht unbedingt nachteilig, weil die verlustreichen Wege für den großen Strom sehr kurz gehalten werden können und weil gleichzeitig die Unipolarmaschine nicht so empfindlich ist wie Halbleiter-Bausteine für große Stromstärken.

Figur 3 skizziert eine Ausführungsform der neuen Vorrichtung, die für besonders kurze Stromwege zwischen der Brennstoffzelle 2 sorgt. Die Brennstoffzelle 2 ist streifenförmig ausgebildet und um die Rotorachse 14 des hier teilweise dargestellten Rotors 15 der Unipolarmaschine herum aufgewickelt. Dabei sind im Zentrum des Rotors 15 Tanks 24 für Wasserstoff und Sauerstoff zur Versorgung der Brennstoffzelle 2 vorgesehen. Die Sauerstoffversorgung der Brennstoffzelle 2 kann aber auch durch Umgebungsluft erfolgen. Gegebenenfalls kann hierfür ein zusätzlicher Kompressor an dem Rotor 15 angeordnet sein. Die Abfuhr des Stroms von den Elektroden 7 erfolgt durch zwei massive Kontaktplatten 25, wobei die spiralförmig verlaufende Elektrode 7 auf der Sauerstoffseite der Brennstoffzelle 2 achsial zu einer der Kontaktplatten und die spiralförmig verlaufende Elektrode 7 auf der Wasserstoffseite der Brennstoffzelle 2 achsial zu der anderen Kontaktplatte 25 führt bzw. an diese angedrückt ist. Von den Kontaktplatten 25 läuft der von der Brennstoffzelle 2 erzeugte Strom durch den Mantel 16 des Rotors 15. Wenn die Brennstoffzelle 2 gemäß Figur 3 auch als Hydrolyseur Verwendung finden soll, bzw. wenn die Brennstoffzelle 2 durch einen Hydrolyseur ersetzt werden soll, muß zusätzlich noch ein Wasserreservoir für die Versorgung der Brennstoffzelle mit in Wasserstoff und Sauerstoff aufzuspaltendem Wasser an dem Rotor 15 angeordnet werden.

### BEZUGSZEICHENLISTE

- 1: - Vorrichtung
- 2: - Brennstoffzelle
- 3: - Unipolarmaschine
- 4: - Steuereinrichtung
- 5: - Polymermembran
- 6: - Diffuserschicht
- 7: - Elektrode
- 8: - Durchbrechung
- 9: - Gießmasse
- 10: - Erregerspule
- 11: - Feldlinie
- 12: - Stator
- 13: - Eisenkern
- 14: - Rotorachse
- 15: - Rotor
- 16: - Mantel
- 17: - Eisenkern
- 18: - Welle
- 19: - Drehlager
- 20: - Welle
- 21: - Rotor
- 22: - Wechselstromgenerator
- 23: - Element
- 24: - Tank
- 25: - Kontaktplatte

## Patentansprüche

1. Vorrichtung zur Energieumwandlung mit mindestens einer Brennstoffzelle, die zwei Elektroden zum Ableiten des in der Brennstoffzelle erzeugten Stroms aufweist, **dadurch gekennzeichnet**, daß eine Unipolarmaschine (3) mit einem Rotor (15) vorgesehen ist, der einen leitenden Mantel (16) aufweist, wobei die beiden Elektroden (7) der mindestens einen Brennstoffzelle (2) über den leitenden Mantel (16) des Rotors (15) der Unipolarmaschine (3) kurzschließbar sind.

2. Vorrichtung nach Anspruch 1, **dadurch gekennzeichnet**, daß die beiden Elektroden (7) über den Mantel (16) unterbrechungsfrei verbunden sind.

3. Vorrichtung nach Anspruch 1 oder 2, **dadurch gekennzeichnet**, daß eine Steuereinrichtung (4) vorgesehen ist, die einen Strom durch mindestens eine Erregerspule (10) eines Stators (12) der Unipolarmaschine (3) regelt, um über den Mantel (16) des Läufers (15) eine einstellbare Gegenspannung zwischen den Elektroden (7) aufzubringen.

4. Vorrichtung nach einem der Ansprüche 1 bis 3, **dadurch gekennzeichnet**, daß der Rotor (15) der Unipolarmaschine (3) mit einem Rotor (21) eines Generators (22) verbindbar ist.

5. Vorrichtung nach einem der Ansprüche 1 bis 4, **dadurch gekennzeichnet**, daß die mindestens eine Brennstoffzelle (2) an dem Rotor (15) angeordnet ist und mit diesem umläuft.

6. Vorrichtung nach Anspruch (5), **dadurch gekennzeichnet**, daß ein Brennstofftank zur Versorgung der mindestens einen Brennstoffzelle an dem Rotor angeordnet ist und mit diesem umläuft.

7. Vorrichtung nach einen der Ansprüche 1 bis 6, **dadurch gekennzeichnet**, daß die mindestens eine Brennstoffzelle (2) zur Sauerstoffversorgung durch Umgebungsluft vorgesehen ist.

8. Vorrichtung nach Anspruch 6, **dadurch gekennzeichnet**, daß die mindesten eine Brennstoffzelle (2) streifenförmig ausgebildet und spiralförmig um eine Rotorachse (14) des Rotors (15) herum aufgewickelt ist.

9. Vorrichtung nach einem Ansprüche 1 bis 8, **dadurch gekennzeichnet**, daß die mindestens eine Brennstoffzelle (2) durch Anlegen einer äußeren Spannung über den Mantel (16) des Rotors (15) in einen Hydrolyseur umkehrbar ist.

10. Vorrichtung zur Energieumwandlung mit mindestens einem Hydrolyseur, der zwei Elektroden zum Zuleiten des in dem Hydrolyseur verbrauchten Stroms aufweist, wobei die Vorrichtung bis auf ein Austauschen der mindestens einen Brennstoffzelle durch die mindesten einen Hydrolyseur nach einem der Ansprüche 1 bis 8 ausgebildet ist.
